# EUROPÄISCHE PATENTANMELDUNG

(11) **EP 1 403 310 A1**
(43) Veröffentlichungstag der Anmeldung: **31.03.2004**
(21) Anmeldenummer: 03020513.2
(22) Anmeldetag: 16.09.2003
(51) Int. Cl.: C08K 5/5313, C08L 67/06, C08L 63/00

(54) **Flammwidrige duroplastische Massen**

(30) Priorität: 25.09.2002 DE 10244578
(71) Anmelder: Clariant GmbH, 65929 Frankfurt am Main (DE)
(72) Erfinder: Knop, Susanne, Dr., 50354 Hürth (DE); Sicken, Martin, Dr., 51149 Köln (DE); Hörold, Sebastian, Dr., 86420 Diedorf (DE)
(74) Vertreter: Paczkowski, Marcus, Dr.

(57) **Zusammenfassung**

Die Erfindung betrifft flammwidrige duroplastische Massen, dadurch gekennzeichnet, dass sie als Flammschutzkomponente mindestens ein Phosphinsäuresalz der Formel (I) und/oder ein Diphosphinsäuresalz der Formel (II) und/oder deren Polymere enthält, 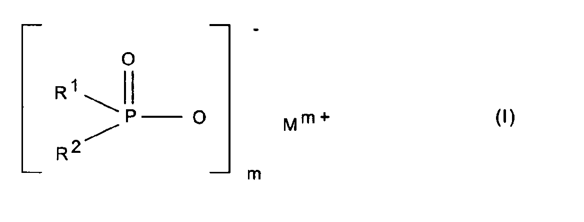 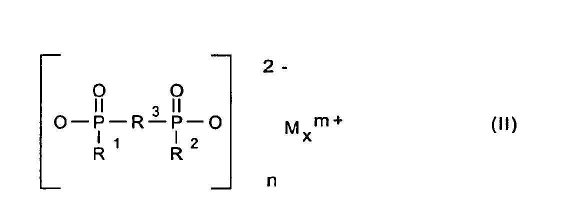 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten, sowie mindestens eine synergistisch wirkende Komponente aus der Substanzreihe der organischen oder anorganischen Phosphor-Verbindungen enthält.

Die Erfindung betrifft auch ein Verfahren zur Herstellung dieser flammwidrigen duroplastischen Massen sowie ihre Verwendung.

## Beschreibung

Die Erfindung betrifft flammwidrige duroplastische Massen, ein Verfahren zu ihrer Herstellung und ihre Verwendung.

Bauteile aus duroplastischen Harzen, insbesondere solche, die glasfaserverstärkt sind, zeichnen sich durch ihre guten mechanischen Eigenschaften, ihre geringe Dichte, weitgehende Chemikalienresistenz und ihre ausgezeichnete Oberflächenqualität aus. Dies und ihr günstiger Preis haben dazu geführt, dass sie in den Anwendungsbereichen Schienenfahrzeuge, Bauwesen und Luftfahrt zunehmend metallische Werkstoffe ersetzen.

Wegen ihrer Brennbarkeit benötigen ungesättigte Polyesterharze (UP-Harze), Epoxidharze (EP-Harze) und Polyurethane (PU-Harze) für einige Anwendungen Flammschutzmittel. Zunehmende Anforderungen des Marktes an den Brandschutz und an die Umweltfreundlichkeit von Produkten erhöhen das Interesse an halogenfreien Flammschutzmitteln wie z.B. Phosphorverbindungen oder Metallhydroxide.

Abhängig vom Anwendungsgebiet werden unterschiedliche Anforderungen hinsichtlich mechanischer, elektrischer und brandschutztechnischer Eigenschaften gestellt. Insbesondere im Bereich Schienenfahrzeuge wurden die Brandschutzanforderungen in letzter Zeit verschärft.

Es ist bekannt, ungesättigte Polyesterharze dadurch flammwidrig einzustellen, dass brom- oder chlorhaltige Säure- bzw. Alkoholkomponenten verwendet werden. Beispiele sind Hexachloroendomethylentetrahydrophthalsäure (HET-Säure), Tetrabromphthalsäure oder Dibromneopentylglycol. Als Synergist wird häufig Antimontrioxid verwendet.

In der JP-05 245 838 (CA 1993: 672700) werden zur Verbesserung der Flammwidrigkeit Aluminiumhydroxid, roter Phosphor und Antimontrioxid mit einem bromierten Harz kombiniert. Nachteilig an brom- oder chlorhaltigen Harzen ist, dass im Brandfall korrosive Gase entstehen, was zu erheblichen Schäden an elektronischen Bauteilen, beispielsweise an Relais in Schienenfahrzeugen, führen kann. Unter ungünstigen Bedingungen können auch polychlorierte bzw. bromierte Dibenzodioxine und Furane entstehen. Es besteht von daher ein Bedarf an halogenfreien flammwidrigen ungesättigten Polyesterharzen und -Formmassen.

Ungesättigte Polyesterharze und -Formmassen können bekannterweise mit Füllstoffen wie Aluminiumhydroxid ausgerüstet werden. Durch die Wasserabspaltung von Aluminiumhydroxid bei höheren Temperaturen wird eine gewisse Flammwidrigkeit erreicht. Bei Füllgraden von 150 bis 200 Teilen Aluminiumhydroxid pro 100 Teilen UP-Harz kann ein Selbstverlöschen und eine geringe Rauchgasdichte erreicht werden. Nachteilig bei derartigen Systemen ist das hohe spezifische Gewicht, das man beispielsweise durch den Zusatz von Hohlglaskugeln zu verringern sucht [Staufer, G., Sperl, M., Begemann, M., Buhl, D., Düll-Mühlbach, I., Kunststoffe 85 (1995), 4].

In der PL 159 350 (CA 1995: 240054) werden Laminate aus ungesättigten Polyesterharzen mit bis zu 180 Teilen Magnesiumhydroxid beschrieben. Bedingt durch die hohe Viskosität des ungehärteten UP-Harzes mit dem Aluminiumhydroxid bzw. Magnesiumhydroxid kann mit derartigen Rezepturen allerdings nicht nach dem technisch äußerst wichtigen Injektionsverfahren gearbeitet werden.

Auch die weiter unten beschriebenen Verfahren zur Einstellung einer Flammwidrigkeit bei ungesättigten Polyesterharzen weisen ebenfalls eine Reihe von Nachteilen, insbesondere einen sehr hohen Füllstoffgehalt auf.

Zur Verringerung des gesamten Füllstoffgehaltes kann Aluminiumhydroxid mit Ammoniumpolyphosphat, wie in der DE-A-37 28 629 beschrieben, kombiniert werden. Die Verwendung von rotem Phosphor als Flammschutzmittel für ungesättigte Polyesterharze ist in der JP-57 016 017 (CA96(22): 182248) und die Kombination von Aluminiumhydroxid, rotem Phosphor und Antimontrioxid in der JP-55 094 918 (CA93(24): 22152t) beschrieben.

Eine geringe Rauchgasdichte und Zersetzungsprodukte geringer Toxizität werden in der PL 161 333 (CA 1994: 632278) durch die Verwendung von Aluminiumhydroxid, Magnesiumhydroxid oder basischem Magnesiumcarbonat, rotem Phosphor und gegebenenfalls hochdisperser Kieselsäure erreicht. Darüber hinaus wird die Verwendung von Melamin und Aluminiumhydroxid in der DE-A-21 59 757 beansprucht.

Da Aluminiumhydroxid allein kein sehr wirksames Flammschutzmittel für ungesättigte Polyesterharze und für Epoxidharze darstellt, werden zur Verringerung des Füllstoffanteils auch Kombinationen mit rotem Phosphor vorgeschlagen. Nachteilig dabei ist allerdings die rote Eigenfarbe des Produktes, was den Einsatz auf dunkel eingefärbte Bauteile beschränkt.

Ungesättigte Polyesterharze sind Lösungen von Polykondensationsprodukte aus gesättigten und ungesättigten Dicarbonsäuren oder deren Anhydriden mit Diolen in copolymerisierbaren Monomeren, vorzugsweise Styrol oder Methylmethacrylat. UP-Harze werden gehärtet durch radikalische Polymerisation mit Initiatoren (z.B. Peroxiden) und Beschleunigern. Die Doppelbindungen der Polyesterkette reagieren mit der Doppelbindung des copolymerisierbaren Lösungsmittelmonomers. Die wichtigsten Dicarbonsäuren zur Herstellung der Polyester sind Maleinsäureanhydrid, Fumarsäure und Terephthalsäure. Das am häufigsten verwendete Diol ist 1,2 Propandiol. Darüber hinaus werden auch Ethylenglycol, Diethylenglycol und Neopentylglycol u.a. verwendet. Das geeignetste Monomer zur Vernetzung ist Styrol. Styrol ist beliebig mit den Harzen mischbar und lässt sich gut copolymerisieren. Der Styrolgehalt in ungesättigten Polyesterharzen liegt normalerweise zwischen 25 und 40 %. Anstelle von Styrol kann auch Methylmethacrylat als Monomeres verwendet werden.

Ungesättigte Polyesterharze unterscheiden sich in ihren chemischen und physikalischen Eigenschaften sowie in ihrem Brandverhalten wesentlich von den namens-ähnlichen Polyestern, bei denen es sich jedoch in Gegensatz zu den vorgenannten ungesättigten Polyesterharzen um thermoplastische Polymere handelt. Diese Polyester werden auch durch völlig andere Verfahren als wie sie im vorhergehenden Absatz für die ungesättigten Polyesterharze beschrieben sind, hergestellt. Polyester lassen sich beispielsweise durch Ringöffnungspolymerisation von Lactonen oder durch Polykondensation von Hydroxycarbonsäuren herstellen, man erhält dann Polymere der allgemeinen Formel -[O-R-(CO)]- . Bei der Polykondensation von Diolen und Dicarbonsäuren bzw. Derivaten von Dicarbonsäuren erhält man Polymere der allgemeinen Formel -[O-R¹-O-(CO)-R²-(CO)]-. Verzweigte und vernetzte Polyester können durch Polykondensation von drei- oder mehrwertigen Alkoholen mit polyfuntionellen Carbonsäuren erhalten werden.

Ungesättigte Polyesterharze und Polyester sind also zwei völlig unterschiedliche Polymere bzw. stellen völlig unterschiedliche Polymergruppen dar.

Eine andere Gruppe von Duroplasten, die Epoxidharze, werden heute zur Herstellung von Formmassen und Beschichtungen mit hohen thermischen, mechanischen und elektronischen Eigenschaften eingesetzt.

Epoxidharze sind Verbindungen, die durch Polyadditionsreaktion von einer Epoxidharz-Komponente und einer Vernetzungs-(Härter) Komponente hergestellt werden. Als Epoxidharz Komponente werden aromatische Polyglycidylester wie Bisphenol-A-diglycidylester, Bisphenol-F-diglycidylester, Polyglycidylester von Phenol-Formaldehydharzen und Kresol-Formaldehydharzen, Polyglycidylester von Phthal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen verwendet.
Als Härter finden Polyamine wie Triethylentetramin, Aminoethylpiperazin und Isophorondiamin, Polyamidoamine, mehrbasige Säure oder deren Anhydride wie z.B. Phthalsäureanhydrid, Hexahydrophthalsäureanhydrid, Methyltetrahydrophthalsäureanhydrid oder Phenole Verwendung. Die Vernetzung kann auch durch Polymerisation unter Verwendung geeigneter Katalysatoren erfolgen.

Epoxidharze sind geeignet zum Verguss von elektrischen bzw. elektronischen Bauteilen und für Tränk- und Imprägnierprozesse. In der Elektrotechnik werden die verwendeten Epoxidharze überwiegend flammwidrig ausgerüstet und für Leiterplatten und Isolatoren eingesetzt.

Epoxidharze für Leiterplatten werden nach dem bisherigen Stand der Technik durch Einreagieren bromhaltiger aromatischen Verbindungen, insbesondere Tetrabrombisphenol A, flammwidrig eingestellt. Nachteilig ist, dass im Brandfall Bromwasserstoff (Gefahrstoff!) freigesetzt wird, was zu Schäden durch Korrosion führen kann. Unter ungünstigen Bedingungen können auch polybromierte Dibenzodioxine und Furane entstehen. Die Verwendung von Aluminiumhydroxid scheidet wegen der bei der Verarbeitung erfolgenden Wasserabspaltung vollständig aus.

Der Brandschutz elektrischer und elektronischer Ausrüstungen ist in Vorschriften und Normen zur Produktsicherheit festgelegt. In den USA werden brandschutztechnische Prüf- und Zulassungsverfahren von Underwriters Laboratories (UL) durchgeführt. Die UL Vorschriften werden heute weltweit akzeptiert. Die Brandprüfungen für Kunststoffe wurden entwickelt, um den Widerstand der Materialien gegenüber Entzündung und Flammenausbreitung zu ermitteln.
Je nach Brandschutzanforderungen müssen die Materialien horizontale Brenntests (Klasse UL 94 HB oder die strengeren vertikalen Tests (UL 94 V-2, V-1 oder V-0) bestehen. Diese Prüfungen simulieren Zündquellen geringer Energie, die in Elektrogeräten auftreten und auf Kunststoffteile elektrischer Baugruppen einwirken können.

Es wurde nun überraschenderweise gefunden, dass Salze von Phosphinsäuren in Kombination mit einer Reihe synergistisch wirkender Verbindungen sich als effektive Flammschutzmittel für duroplastische Harze wie ungesättigte Polyesterharze oder Epoxidharze erweisen.

Alkalisalze von Phosphinsäuren sind bereits als flammhemmende Zusätze für thermoplastische Polyester vorgeschlagen (DE-A-44 30 932). Sie müssen in Mengen bis zu 30 Gew.-% zugesetzt werden. Weiterhin sind die Salze von Phosphinsäuren mit einem Alkalimetall oder einem Metall aus der zweiten oder dritten Hauptgruppe des Periodensystems zur Herstellung flammwidriger PolyamidFormmassen eingesetzt worden, insbesondere die Zinksalze (DE-A-2 447 727). Im Brandverhalten unterscheiden sich thermoplastische Polyester wie PET und PBT und duroplastische Polyester wie ungesättigte Polyesterharze deutlich: Thermoplastische Materialien tropfen im Brandfall ab, duroplastische Materialien dagegen schmelzen nicht und tropfen auch nicht ab.

Im einzelnen betrifft die Erfindung flammwidrige duroplastische Massen, dadurch gekennzeichnet, dass sie als Flammschutzkomponente mindestens ein Phosphinsäuresalz der Formel (I) und/oder ein Diphosphinsäuresalz der Formel (II) und/oder deren Polymere enthält, 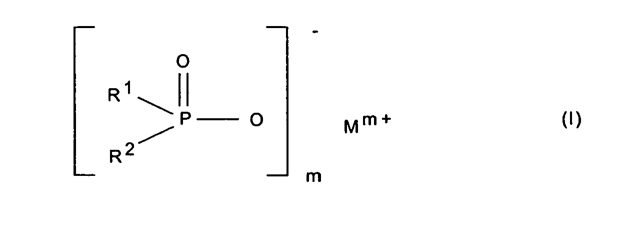 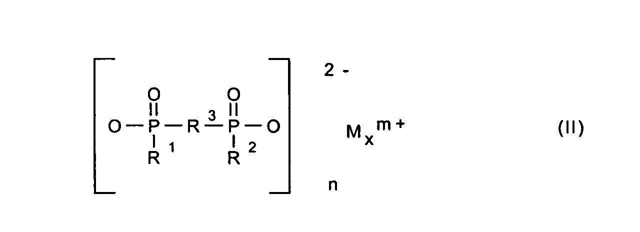 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder - Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten, sowie mindestens eine synergistisch wirkende Komponente aus der Substanzreihe der organischen oder anorganischen Phosphor-Verbindungen enthält.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methylphenylen, Ethylphenylen, tert.-Butylphenylen, Methylnaphthylen, Ethylnaphthylen oder tert.-Butylnaphthylen.

Bevorzugt bedeutet R³ auch Phenylmethylen, Phenylethylen, Phenylpropylen oder Phenylbutylen.

Bevorzugt enthalten die erfindungsgemäßen flammwidrigen duroplastischen Massen 0,1 bis 30 Masseteile mindestens eines Phosphinsäuresalzes der Formel (I) und/oder ein Diphosphinsäuresalz der Formel (II) und/oder deren Polymere und 0,1 bis 100 Masseteile organische Phosphorverbindung je 100 Masseteile duroplastischer Masse.

Besonders bevorzugt enthalten die erfindungsgemäßen flammwidrigen duroplastischen Massen 1 bis 15 Masseteile mindestens eines Phosphinsäuresalzes der Formel (I) und/oder ein Diphosphinsäuresalz der Formel (II) und/oder deren Polymere und 1 bis 20 Masseteile organische Phosphorverbindung je 100 Masseteile duroplastischer Masse.

Bevorzugt handelt es sich bei der organischen Phosphorverbindung um Triethylphosphat, Triarylphosphate, Resorcindiphosphorsäuretetraphenylester, Dimethylmethylphosphonat und/oder dessen Polymer mit Phosphorpentoxid, Phosphonat-Ester, Methanphosphonsäure(5-ethyl-2-methyl-dioxaphosphorinan-5-yl)methyl-methylester, Phosphorsäureester, Phosphorsäurepyroester, Alkylphosphonsäuren und/oder deren oxalkylierten Derivate.

Bevorzugt enthalten die erfindungsgemäßen flammwidrigen duroplastischen Massen 0,1 bis 30 Masseteile mindestens eines Phosphinsäuresalzes der Formel (I) und/oder ein Diphosphinsäuresalz der Formel (II) und/oder deren Polymere und 0,1 bis 100 Masseteile an anorganischer Phosphorverbindung je 100 Masseteile duroplastischer Masse.

Besonders bevorzugt enthalten die erfindungsgemäßen flammwidrigen duroplastischen Massen 1 bis 15 Masseteile mindestens eines Phosphinsäuresalzes der Formel (I) und/oder ein Diphosphinsäuresalz der Formel (II) und/oder deren Polymere und 1 bis 20 Masseteile an anorganischer Phosphorverbindung je 100 Masseteile duroplastischer Masse.

Bevorzugt handelt es sich bei der anorganischen Phosphorverbindung um roten Phosphor, Ammoniumphosphat und/oder Melaminpolyphosphat.

Bevorzugt enthalten die erfindungsgemäßen flammwidrigen duroplastischen Massen weiterhin Carbodiimide.

Die Erfindung betrifft auch flammwidrige duroplastische Massen, dadurch gekennzeichnet, dass es sich hierbei um Formmassen, Beschichtungen oder Laminate aus duroplastischen Harzen handelt.

Bevorzugt handelt es sich bei den duroplastischen Harzen um ungesättigte Polyesterharze oder um Epoxidharze.

Die Erfindung betrifft ebenfalls ein Verfahren zur Herstellung von flammwidrigen duroplastischen Massen, dadurch gekennzeichnet, dass man ein duroplastisches Harz mit einer Flammschutzkomponente aus mindestens einem Phosphinsäuresalz der Formel (I) und/oder ein Diphosphinsäuresalz der Formel (II) und/oder deren Polymere mit mindestens einer synergistisch wirkenden Komponente aus der Substanzreihe der organischen oder anorganischen Phosphor-Verbindungen vermischt und die resultierende Mischung bei Drücken von 3 bis 10 bar und Temperaturen von 20 bis 80°C nass presst (Kaltpressung).

Die Erfindung betrifft auch ein Verfahren zur Herstellung von flammwidrigen duroplastischen Massen, dadurch gekennzeichnet, dass man ein duroplastisches Harz mit einer Flammschutzkomponente aus mindestens einem Phosphinsäuresalz der Formel (I) und/oder ein Diphosphinsäuresalz der Formel (II) und/oder deren Polymere mit mindestens einer synergistisch wirkenden Komponente aus der Substanzreihe der organischen oder anorganischen Phosphor-Verbindungen vermischt und die resultierende Mischung bei Drücken von 3 bis 10 bar und Temperaturen von 80 bis 150 °C nass presst (Warm- oder Heißpressung).

Ein weiteres Verfahren zur Herstellung von flammwidrigen duroplastischen Massen gemäß der vorliegenden Erfindung ist dadurch gekennzeichnet, dass man ein duroplastisches Harz mit einer Flammschutzkomponente aus mindestens einem Phosphinsäuresalz der Formel (I) und/oder ein Diphosphinsäuresalz der Formel (II) und/oder deren Polymere mit mindestens einer synergistisch wirkenden Komponente aus der Substanzreihe der organischen oder anorganischen Phosphor-Verbindungen vermischt und aus der resultierenden Mischung bei Drücken von 50 bis 150 bar und Temperaturen von 140 bis 160°C Kunstharzmatten fertigt.

Die Erfindung betrifft schließlich auch die Verwendung der erfindungsgemäß eingesetzten Flammschutzmittel-Komponente zur flammfesten Ausrüstung von duroplastischen Massen.

Bevorzugt handelt es sich bei den duroplastischen Massen um ungesättigte Polyesterharze oder um Epoxidharze.

Bevorzugt handelt es sich bei den duroplastischen Massen um Formmassen, Beschichtungen oder Laminate.

Die Salze der Phosphinsäuren, wie sie gemäß der Erfindung eingesetzt werden, können nach bekannten Methoden hergestellt werden, die beispielsweise in der EP-A-0 699 708 näher beschrieben sind.

Wie in den nachstehenden Beispielen ausgeführt ist, hat sich gezeigt, dass organische oder anorganische Phosphor-Verbindungen wie Ammoniumpolyphosphat und Salze von Phosphinsäuren der allgemeinen Formel (I) bzw. (II) für sich allein geprüft in duroplastischen Harzen nicht ausreichend wirksam sind.

Überraschenderweise wurde nun gefunden, dass eine Kombination aus Phosphinsäuresalzen und organischen oder anorganischen Phosphor-Verbindungen geeignet sind, die für duroplastische Kunststoffe beste Brennbarkeitsklasse V-0 nach UL 94 Vertikaltest zu erreichen.
In den Beispielen wurden folgende Verbindungen eingesetzt:

®Alpolit SUP 403 BMT (Vianova Resins GmbH, Wiesbaden), ungesättigtes Polyesterharz, ca. 57 %ig in Styrol, Säurezahl max 30 mgKOH/g, vorbeschleunigt und schwach thixotrop eingestellt, niedrigviskos (Viskosität im Auslaufbecher 4 mm: 110 ± 10 s) und stark reduzierte Styrolemissionen.

®Palatal 340 S (DSM-BASF Structural Resins, Ludwigshafen) ungesättigtes Polyesterharz, ca. 49 %ig in Styrol und Methylmethacrylat, Dichte 1,08 g/ml, Säurezahl 7 mgKOH/g, vorbeschleunigt, niedrigviskos (dynamische Viskosität ca. 50 mPa*s).

®Beckopox EP 140 (Vianova Resins GmbH, Wiesbaden), niedrigmolekulares Kondensationsprodukt aus Bisphenol A und Epichlorhydrin mit einer Dichte von 1,16 g/ml und einem Epoxidäquivalent von 180-192

®Beckopox EH 625 (Vianova Resins GmbH, Wiesbaden), modifiziertes aliphatisches Polyamin mit einem H-Aktiväquivalentgewicht von 73 und einer dynamischen Viskosität von ca. 1000 mPa*s

Kobaltbeschleuniger NL 49P (Akzo Chemie GmbH, Düren) Kobaltoktoatlösung in Dibutylphthalat mit einem Kobaltgehalt von 1 Masse %

Kobaltbeschleuniger NL 63-10S (Akzo Chemie GmbH, Düren)

Butanox M 50 (Akzo Chemie GmbH, Düren) Methylethylketonperoxid, mit Dimethylphthalat phlegmatisiert, klare Flüssigkeit mit einem Aktiv-Sauerstoffgehalt von mind. 9 Masse %

DEPAL: Aluminiumsalz der Diethylphosphinsäure

### Herstellung der Prüfkörper

Das duroplastische Harz und die Flammschutzmittel-Komponenten sowie gegebenenfalls weitere Additive werden mit einer Dissolverscheibe homogen vermischt. Nach Zugabe des Härters wird nochmals homogenisiert.

Bei ungesättigten Polyesterharzen wird das Harz mit dem Kobaltbeschleuniger vermischt, die Flammschutzmittel-Komponenten zugesetzt und nach Homogenisieren die Härtung durch die Zugabe des Peroxides gestartet.

Bei Epoxidharzen werden die Flammschutzmittel-Komponenten der Epoxidharz-Komponente zugegeben und homogen vermischt. Anschließend wird der Amin- bzw. der Anhydridhärter dazugegeben.

In einer beheizten Presse werden auf einer ®Hostaphan Trennfolie und einem Stahlrahmen zwei Lagen Textilglas-Endlosmatte vom Flächengewicht 450 g/m² eingelegt. Anschließend wird etwa die Hälfte des Harz-Flammschutzmittel-Gemisches gleichmäßig verteilt. Nach Zugabe einer weiteren Glasmatte wird das restliche Harz-Flammschutzmittel-Gemisch verteilt, das Laminat mit einer Trennfolie abgedeckt und bei einer Temperatur von 50°C während einer Stunde bei einem Pressdruck von 10 bar eine Pressplatte von 4 mm Dicke hergestellt.

Die Prüfung des Brandverhaltens wurde nach der Vorschrift von Underwriters Laboratories "Test for Flammability of Plastics Materials - UL 94" in der Fassung vom 02.05.1975 an Prüfkörpern von 127 mm Länge, 12,7 mm Breite und verschiedener Dicke durchgeführt.

Der Sauerstoffindex wurde in einer modifizierten Apparatur in Anlehnung an ASTM_D 2863-74 bestimmt.

### 1. Ergebnisse mit ungesättigten Polyesterharzen

Tabelle 1 zeigt Vergleichsbeispiele mit alleiniger und kombinierter Verwendung organischer oder anorganischer Phosphor-Verbindungen und DEPAL als Flammschutzmittel für ein ungesättigtes Polyesterharz (Viapal UP 403 BMT). Aus der Tabelle ist zu entnehmen, dass bei alleiniger Verwendung von Phosphor-Verbindungen bei einer Konzentration von 25 Teilen/100 Teilen ungesättigtes Polyesterharz keine V-0 Einstufung zu ereichen ist.
Mit der Kombination von DEPAL mit Phosphor-Verbindungen ist jedoch eine V-0 Einstufung bei einer Laminatdicke von 1,5 mm zu erreichen. Die Laminate können beliebig eingefärbt werden.

Aufgrund des geringen Füllstoffgehaltes können diese UP-Harz-Laminate im Injektionsverfahren hergestellt werden.

**Tabelle1**

| (Vergleichsbeispiele): | | | |
|---|---|---|---|
| Brennverhalten von ungesättigtem Polyester Harz Laminaten nach UL 94, 30 Gew.-% Textilglas-Endlosmatte, Laminatdicke 1,5 mm, Harz Viapal UP 403 BMT, Härter Butanox M50, Beschleuniger NL 49 P | | | |

| Beispiel Nr. | Flammschutzmittel Teile/100 Teile Harz | UL 94 -Klassifizierung | LOI |
|---|---|---|---|
| 1 | 25 DEPAL* | n.k. | 0,33 |
| 2 | 25 Triethylphosphat | n.k. | 0,28 |
| 3 | 25 Melaminpolyphosphat | n.k. | 0,30 |
| 4 Erfindung | 10 DEPAL + 10 Triethylphosphat | V-0 | 0,38 |
| 5 Erfindung | 10 DEPAL + 10 Melaminpolyphosphat | V-0 | 0,42 |

| | | | |
|---|---|---|---|
| * DEPAL = Diethylphosphinsäure-Aluminiumsalz n.k. = nicht klassifizierbar nach UL 94 Vertikaltest | | | |

### 2. Ergebnisse mit Epoxidharzen

Die Tabelle 2 zeigt Brandprüfungen mit einem Polyamin gehärteten Epoxidharz (Harz Beckopox EP 140, Härter Beckopox EH 625). Durch die Kombination von DEPAL mit Phosphor-Verbindungen ist jedoch eine V-0 Einstufung bei einer Laminatdicke von 1,5 mm zu erreichen. Mit den alleinigen Verbindungen wird dagegen UL 94 V-0 mit 25 Teilen Flammschutzmittel nicht erreicht.

**Tabelle 2:**

| Brennverhalten von Epoxidharz-Formkörpern nach UL 94, Materialstärke 1,6 mm Harz 100 teile Beckopox EP 140, Härter 39 Teile Beckopox EH 625 | | | |
|---|---|---|---|
| Beispiel Nr. | Flammschutzmittel Teile/100 Teile Harz | UL 94 -Klassifizierung | LOI |
| 6 | 10 DEPAL | n. k. | 0,27 |
| 7 | 20 DEPAL | V-1 | 0,32 |
| 8 | 25 Triethylphosphat | n.k. | 0,25 |
| 9 | 25 Melaminpolyphosphat | V-1 | 0,39 |
| 10 Erfindung | 10 DEPAL + 10 Triethylphosphat | V-0 | 0,41 |
| 11 Erfindung | 10 DEPAL + 10 Melaminpolyphosphat | V-0 | 0,40 |

## Patentansprüche

1. Flammwidrige duroplastische Massen, **dadurch gekennzeichnet, dass** sie als Flammschutzkomponente mindestens ein Phosphinsäuresalz der Formel (I) und/oder ein Diphosphinsäuresalz der Formel (II) und/oder deren Polymere enthält, 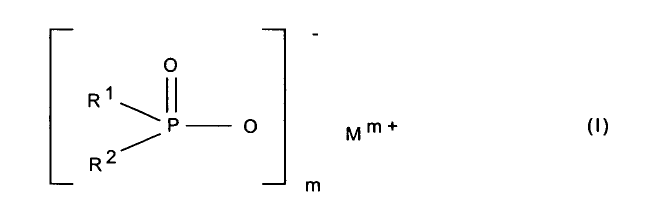 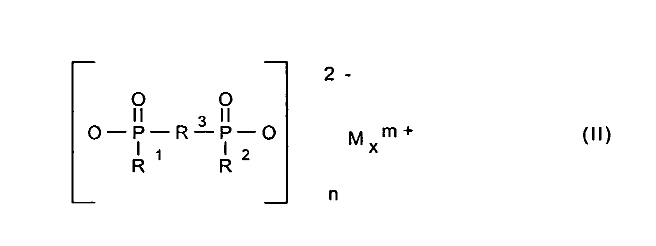 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten, sowie mindestens eine synergistisch wirkende Komponente aus der Substanzreihe der organischen oder anorganischen Phosphor-Verbindungen enthält.

2. Flammwidrige duroplastische Massen nach Anspruch 1, **dadurch gekennzeichnet, dass** R¹, R² gleich oder verschieden sind und C₁-C₆-Alkyl, linear oder verzweigt und/oder Phenyl bedeuten.

3. Flammwidrige duroplastische Massen nach Anspruch 1 oder 2, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

4. Flammwidrige duroplastische Massen nach einem oder mehreren der Ansprüche 1 bis 3, **dadurch gekennzeichnet, dass** R³ Methylen, Ethylen, n-Propylen, iso-Propylen, n-Butylen, tert.-Butylen, n-Pentylen, n-Octylen oder n-Dodecylen bedeutet.

5. Flammwidrige duroplastische Massen nach einem oder mehreren der Ansprüche 1 bis 3, **dadurch gekennzeichnet, dass** R³ Phenylen oder Naphthylen bedeutet.

6. Flammwidrige duroplastische Massen nach einem oder mehreren der Ansprüche 1 bis 3, **dadurch gekennzeichnet, dass** R³ Methylphenylen, Ethylphenylen, tert.-Butylphenylen, Methylnaphthylen, Ethylnaphthylen oder tert.-Butylnaphthylen bedeutet.

7. Flammwidrige duroplastische Massen nach einem oder mehreren der Ansprüche 1 bis 3, **dadurch gekennzeichnet, dass** R³ Phenylmethylen, Phenylethylen, Phenylpropylen oder Phenylbutylen bedeutet.

8. Flammwidrige duroplastische Massen nach einem oder mehreren der Ansprüche 1 bis 7, **dadurch gekennzeichnet, dass** sie 0,1 bis 30 Masseteile Phosphinsäuresalz der Formel (I) und/oder ein Diphosphinsäuresalz der Formel (II) und/oder deren Polymere und 0,1 bis 100 Masseteile organische Phosphorverbindung je 100 Masseteile duroplastischer Masse enthalten.

9. Flammwidrige duroplastische Massen nach einem oder mehreren der Ansprüche 1 bis 7, **dadurch gekennzeichnet, dass** sie 1 bis 15 Masseteile Phosphinsäuresalz der Formel (I) und/oder ein Diphosphinsäuresalz der Formel (II) und/oder deren Polymere und 1 bis 20 Masseteile organische Phosphorverbindung je 100 Masseteile duroplastischer Masse enthalten.

10. Flammwidrige duroplastische Massen nach einem oder mehreren der Ansprüche 1 bis 7, **dadurch gekennzeichnet, dass** es sich bei der organischen Phosphorverbindung um Triethylphosphat, Triarylphosphate, Resorcindiphosphorsäuretetraphenylester, Dimethylmethylphosphonat und/oder dessen Polymer mit Phosphorpentoxid, Phosphonat-Ester, Methanphosphonsäure(5-ethyl-2-methyl-dioxaphosphorinan-5-yl)methylmethylester, Phosphorsäureester, Phosphorsäurepyroester, Alkylphosphonsäuren und/oder deren oxalkylierten Derivate handelt.

11. Flammwidrige duroplastische Massen nach einem oder mehreren der Ansprüche 1 bis 7, **dadurch gekennzeichnet, dass** sie 0,1 bis 30 Masseteile Phosphinsäuresalz der Formel (I) und/oder ein Diphosphinsäuresalz der Formel (II) und/oder deren Polymere und 0,1 bis 100 Masseteile an anorganischer Phosphorverbindung je 100 Masseteile duroplastischer Masse enthalten.

12. Flammwidrige duroplastische Massen nach einem oder mehreren der Ansprüche 1 bis 7, **dadurch gekennzeichnet, dass** sie 1 bis 15 Masseteile Phosphinsäuresalz der Formel (I) und/oder ein Diphosphinsäuresalz der Formel (II) und/oder deren Polymere und 1 bis 20 Masseteile an anorganischer Phosphorverbindung je 100 Masseteile duroplastischer Masse enthalten.

13. Flammwidrige duroplastische Massen nach einem oder mehreren der Ansprüche 1 bis 7, **dadurch gekennzeichnet, dass** es sich bei der anorganischen Phosphorverbindung um roten Phosphor, Ammoniumphosphat und/oder Melaminpolyphosphat handelt.

14. Flammwidrige duroplastische Massen nach einem oder mehreren der Ansprüche 1 bis 13, **dadurch gekennzeichnet, dass** sie weiterhin Carbodiimide enthalten.

15. Flammwidrige duroplastische Massen nach einem oder mehreren der Ansprüche 1 bis 14, **dadurch gekennzeichnet, dass** es sich hierbei um Formmassen, Beschichtungen oder Laminate aus duroplastischen Harzen handelt.

16. Flammwidrige duroplastische Massen nach Anspruch 15, **dadurch gekennzeichnet, dass** es sich bei den duroplastischen Harzen um ungesättigte Polyesterharze oder um Epoxidharze handelt.

17. Verfahren zur Herstellung von flammwidrigen duroplastischen Massen nach einem oder mehreren der Ansprüche 1 bis 16, **dadurch gekennzeichnet, dass** man ein duroplastisches Harz mit einer Flammschutzkomponente aus Phosphinsäuresalz der Formel (I) und/oder ein Diphosphinsäuresalz der Formel (II) und/oder deren Polymere mit mindestens eine synergistisch wirkende Komponente aus der Substanzreihe der organischen oder anorganischen Phosphor-Verbindungen vermischt und die resultierende Mischung bei Drücken von 3 bis 10 bar und Temperaturen von 20 bis 60°C nass presst (Kaltpressung).

18. Verfahren zur Herstellung von flammwidrigen duroplastischen Massen nach einem oder mehreren der Ansprüche 1 bis 16, **dadurch gekennzeichnet, dass** man ein duroplastisches Harz mit einer Flammschutzkomponente aus Phosphinsäuresalz der Formel (I) und/oder ein Diphosphinsäuresalz der Formel (II) und/oder deren Polymere mit mindestens eine synergistisch wirkende Komponente aus der organischen oder anorganischen Phosphor-Verbindungen vermischt und die resultierende Mischung bei Drücken von 3 bis 10 bar und Temperaturen von 80 bis 150°C nass presst (Warm- oder Heißpressung).

19. Verfahren zur Herstellung von flammwidrigen duroplastischen Massen nach einem oder mehreren der Ansprüche 1 bis 16, **dadurch gekennzeichnet, dass** man ein duroplastisches Harz mit einer Flammschutzkomponente aus Phosphinsäuresalz der Formel (I) und/oder ein Diphosphinsäuresalz der Formel (II) und/oder deren Polymere mit mindestens eine synergistisch wirkende Komponente aus der Substanzreihe der organischen oder anorganischen Phosphor-Verbindungen vermischt und aus der resultierenden Mischung bei Drücken von 50 bis 150 bar und Temperaturen von 140 bis 160°C Kunstharzmatten fertigt.
